# EUROPEAN PATENT APPLICATION

(11) **EP 4 657 019 A1**
(43) Date of publication of application: **03.12.2025**
(21) Application number: 23918375.9
(22) Date of filing: 26.01.2023
(51) Int. Cl.: G01C 3/06

(54) **IMAGE PROCESSING DEVICE, IMAGING DEVICE, AND IMAGE PROCESSING METHOD**

(71) Applicant: Astemo, Ltd., Chiyoda-ku, Tokyo 1000004 (JP)
(72) Inventor: NAGOSHI, Hiroto, Hitachinaka-shi, Ibaraki 312-8503 (JP)
(74) Representative: MERH-IP Matias Erny Reichl Hoffmann Patentanwälte PartG mbB
(86) International application number: PCT/JP2023/002389
(87) International publication number: WO 2024/157410

(57) **Abstract**

In an aspect of the present invention, there is provided an image processing device for processing a series of a pair of captured images acquired by a pair of camera modules adapted to capture an image of a surrounding environment of a vehicle, thereby obtaining surrounding-environment recognition information for controlling the vehicle, wherein the image processing device is enabled to select a region of the captured images to be used for creating a parallax image from the pair of captured images, and the image processing device changes over the selection of the region according to the number of the pairs of captured images to be introduced into image processing per unit time.

## Description

### Technical Field

The present invention relates to an image processing device, an imaging device, and an image processing method for creating a parallax image from images captured by a plurality of cameras.

### Background Art

In order to improve traveling safety of a vehicle, there have been studied systems for detecting a vehicle or pedestrian traversing in front of the vehicle, with a sensor mounted on the vehicle, and for giving an alarm to the driver or actuating a brake if there is a possibility of collision with such a vehicle or pedestrian. As a sensor for monitoring an area forward of the vehicle, there are a millimeter wave radar, a laser radar, a camera, and the like. As types of cameras, there are a monocular camera, and a stereo camera using a plurality of cameras.

A stereo camera can measure the distance to a photographed object, using a parallax in an overlapping region photographed by two cameras arranged at a predetermined interval. Therefore, the stereo camera enables accurately grasping the danger degree of collision with an object ahead. However, such a stereo camera uses captured images obtained from two or more cameras after performing image processing thereon. Therefore, in general, an image processing portion in a stereo camera performs larger amounts of calculations than those of an electronic circuit for handling a single camera, for the same resolution/angle of view, thereby necessitating larger electronic circuit scales.

For coping therewith, there has been devised a stereo camera device, as follows. That is, in order to decrease the angle of view of the stereo camera, the overlapping region (stereo region) of a plurality of cameras is decreased, and non-overlapping regions are treated as monocular regions, so as to decrease the angle of view to be subjected to image processing by the stereo camera, in the entire captured image (see PTL 1). In this stereo camera device, as distance information in the monocular region, the distance to a forward object is detected based on that the road surface is at the same height as that in the stereo region, or based on information about a forward object having been appeared in the past. Namely, in the monocular region, the distance to a forward object is estimated with high accuracy based on the distance information detected in the stereo region.

### Citation List

### Patent Literature

PTL 1: JP 2017-96777 A

### Summary of Invention

### Technical Problem

However, in the event of an object running from a side area or when the own vehicle is turning right or left at an intersection, a forward object to be detected appears in the monocular region at first, which makes it impossible to use information about a forward object having been detected in the past in the stereo region. At this time, the distance to the forward object must be estimated on the assumption that the road surface is at the same height as that in the stereo region. When the forward object has approached the own vehicle, finally, the forward object appears in the stereo region, which makes it possible to calculate the distance to the forward object more accurately in the stereo region. However, even though the distance to the forward object is accurately calculated at this time, if there is a larger error between the actual distance and the distance determined in the monocular region, this increases the possibilities of collision and sudden braking, which affects the traveling safety.

The present invention has been made in view of the aforementioned circumstances, and provides a method for suppressing the increase of electronic circuit scales and securing traveling safety, in processing overlapping regions of images captured by a plurality of cameras.

### Solution to Problem

In order to solve the aforementioned problem, an image processing device in an aspect of the present invention is an image processing device for processing a series of a pair of captured images acquired by a pair of camera modules adapted to capture an image of a surrounding environment of a vehicle, thereby obtaining surrounding-environment recognition information for controlling the vehicle, wherein the image processing device is enabled to select a region of the captured images to be used for creating a parallax image from the pair of captured images, and the image processing device changes over the selection of the region according to the number of the pairs of captured images to be introduced into image processing per unit time.

### Advantageous Effects of Invention

In at least one aspect of the present invention, in processing overlapping regions of images captured by the plurality of cameras, the regions of the captured images are changed over according to the number of captured images to be introduced into the image processing per unit time, which makes it possible to suppress the increase of the electronic circuit scales and secure traveling safety.

Other problems, structures, and advantages than those described above will be clarified by the following description of embodiments.

### Brief Description of Drawings

[FIG. 1] FIG. 1 is a diagram illustrating an example of a functional structure of an imaging device including an image processing device according to a first embodiment, and an example of data held during high-speed traveling.
[FIG. 2] FIG. 2 is an enlarged view of an example of data (images) held during high-speed traveling, in the imaging device according to the first embodiment.
[FIG. 3] FIG. 3 is a view illustrating an example of captured images inputted to the image processing device during traveling on an expressway, according to the first embodiment.
[FIG. 4] FIG. 4 is a timing chart illustrating an example of image processing operations in the image processing device, during traveling on an expressway, according to the first embodiment.
[FIG. 5] FIG. 5 is a diagram illustrating an example of the functional structure of the imaging device including the image processing device, and an example of data held during low-speed traveling, according to the first embodiment.
[FIG. 6] FIG. 6 is an enlarged view of an example of held data (images) in the image processing device, during low-speed traveling, according to the first embodiment.
[FIG. 7] FIG. 7 is a view illustrating an example of captured images inputted to the image processing device, during traveling on a general road, according to the first embodiment.
[FIG. 8] FIG. 8 is a timing chart illustrating an example of image processing operations in the image processing device, during traveling on the general road, according to the first embodiment.
[FIG. 9] FIG. 9 is a view illustrating an example of captured images inputted to an image processing device according to a second embodiment.
[FIG. 10] FIG. 10 is a view illustrating an example of captured images inputted to an image processing device according to a third embodiment.
[FIG. 11] FIG. 11 is a diagram illustrating an example of a functional structure of an imaging device including an image processing device according to a fourth embodiment.
[FIG. 12] FIG. 12 is an enlarged view of an example of data (images) held when the vehicle is traveling, in the image processing device according to the fourth embodiment.
[FIG. 13] FIG. 13 is a timing chart illustrating an example of image processing operations in the image processing device, during traveling through a traffic jam on an expressway, according to the fourth embodiment.
[FIG. 14] FIG. 14 is a block diagram illustrating an example of a hardware structure of the image processing device included in the imaging device according to each embodiment of the present invention.

### Description of Embodiments

Hereinafter, examples of modes (which will be referred to as "embodiments", hereinafter) for carrying out the present invention will be described with reference to the accompanying drawings. In the present specification and the accompanying drawings, the same constituents or constituents having substantially the same function are denoted by the same reference character, and will not be described redundantly.

### <First Embodiment>

### [The Structure of an Imaging Device Including an Image Processing Device]

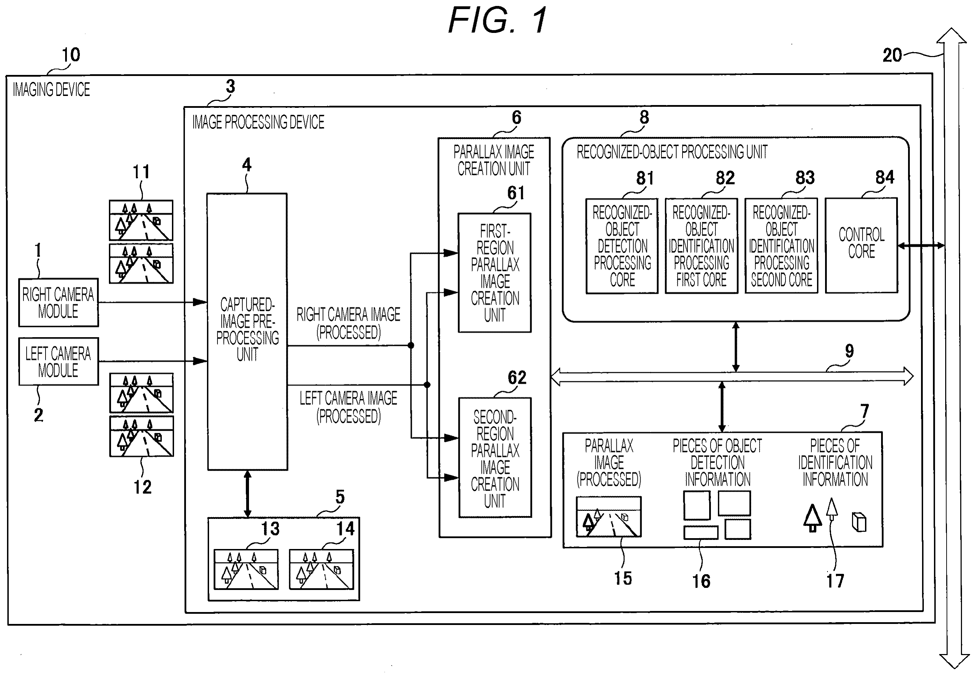

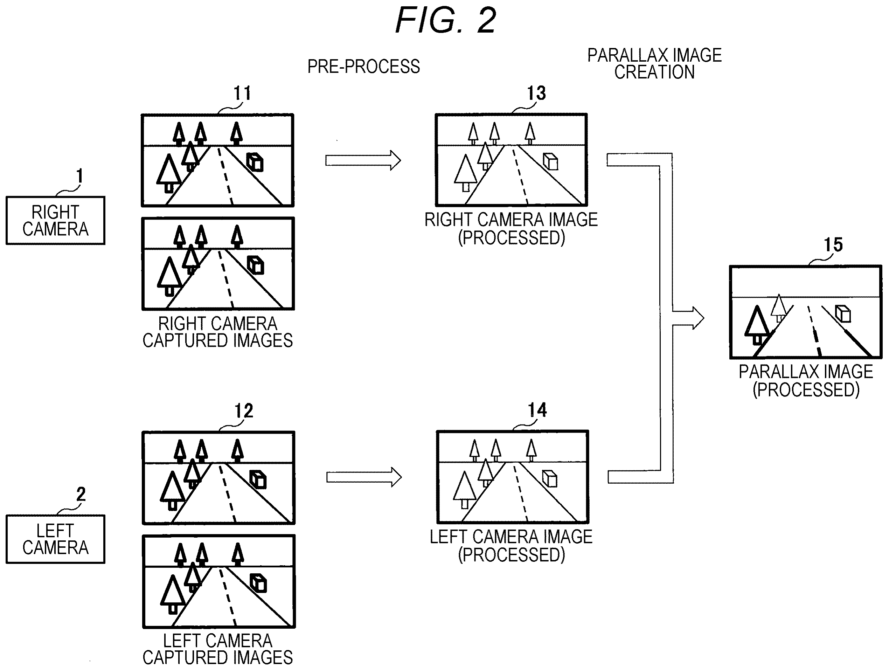

First, there will be described the structure of an imaging device including an image processing device according to a first embodiment of the present invention, with reference to FIGS. 1 and 2.

FIG. 1 is a diagram illustrating an example of a functional structure of the imaging device including the image processing device according to the first embodiment, and an example of data held during high-speed traveling.

FIG. 2 is an enlarged view of an example of data (images) held during high-speed traveling, in the image processing device according to the first embodiment.

In FIG. 1, an imaging device 10 is a device that captures an image of a surrounding environment around a vehicle and recognizes the surrounding environment around the vehicle, based on the acquired captured image. The vehicle is assumed to be a vehicle adapted to perform automatic driving (AD) or a vehicle equipped with an advanced driving assistance function (ADAS).

The imaging device 10 includes a pair of camera modules 1 and 2 mounted on the vehicle and adapted to capture an image of a surrounding environment around the vehicle, such as an area forward of the vehicle. Further, the imaging device 10 includes an image processing device 3 adapted to create a parallax image from plural pairs of captured images 11 and 12 acquired by the pair of camera modules 1 and 2 and to finally output surrounding-environment recognition information. The image processing device 3 processes a series of a pair of captured images acquired by the pair of camera modules 1 and 2, thereby obtaining pieces of identification information 17 as surrounding-environment recognition information for controlling the vehicle.

The pair of camera modules 1 and 2 includes a right-side camera module 1 and a left-side camera module 2. Hereinafter, the right-side camera module 1 will be referred to as "right camera module 1", and the left-side camera module 2 will be referred to as "left camera module 2". Each of the right camera module 1 and the left camera module 2 includes an imaging element, and a circuit element for processing electric signals outputted from the imaging element. As the imaging element, a charge-coupled device (CCD) image sensor, a complementary metal oxide semiconductor (CMOS) image sensor, or the like is used.

Each of the right camera module 1 and the left camera module 2 converts light transmitted through a lens into electric signals by the imaging element, performs AD conversion on the electric signals by the circuit element, and outputs the signals resulted from the AD conversion as digital signals. The imaging device 10 monitors an area forward of the vehicle in a normal vehicle traveling state, and outputs captured images 11 acquired by the right camera module 1 (which will also be referred to as "right captured images 11", hereinafter), and captured images 12 acquired by the left camera module 2 (which will also be referred to as "left captured images 12" hereinafter) to the image processing device 3.

The image processing device 3 is enabled to select regions of captured images to be used for creating a parallax image from a pair of captured images, and changes over the selection of the regions according to the number of pairs of captured images to be introduced into image processing per unit time. Hereinafter, the structure and operations of the image processing device 3 will be described in detail.

The image processing device 3 includes blocks of a captured-image pre-processing unit 4, a data holding region 5, a parallax image creation unit 6, a data holding region 7, and a recognized-object processing unit 8. The parallax image creation unit 6, the data holding region 7, and the recognized-object processing unit 8 are connected to each other through a system bus 9 so as to be able to perform data communication with each other.

The captured-image pre-processing unit 4 selects captured images to be processed, out of the right captured images 11 and the left captured images 12, while discarding the other captured images. As information used for the selection and discarding, information about a traveling scene is provided from a control core 84 in the recognized-object processing unit 8 to the captured-image pre-processing unit 4. After the selection and discarding, the captured-image pre-processing unit 4 performs image processing on each captured image to be processed, for the purpose of removing noise and clarifying the image. Specific examples of the processing include adjustment of luminance of the entire image, adjustment of luminance of each pixel, adjustment of gain for each luminance, geometric correction, shading correction, and the like. Here, the right captured image ("right camera image" in the figure) 13 from the right camera module 1, which has been processed, and the left captured image ("left camera image" in the figure) 14 from the left camera module 2, which has been processed, are temporarily stored in the data holding region 5 in the captured-image pre-processing unit 4 and are inputted to the parallax image creation unit 6 in an appropriate processing cycle.

The parallax image creation unit 6 creates a parallax image 15 by combining the right captured image 13 having been processed and the left captured image 14 having been processed with each other. The parallax image 15 indicates information about the distance to an object forward of the vehicle, using a difference between the right captured image 13 having been processed and the left captured image 14 having been processed.

In the present embodiment, the parallax image creation unit 6 includes two parallax-image-creation-unit blocks. Each parallax-image-creation-unit block is structured to process half regions of input images and output a parallax image from the half regions of the input images. Namely, the parallax image creation unit 6 includes a first-region parallax image creation unit 61 for processing half regions of the entire input images, and a second-region parallax image creation unit 62 for processing half regions of the entire input images, similarly. The first region and the second region may or may not overlap each other. If the first region and the second region do not overlap each other at all, each parallax image creation unit can process exactly a half of an entire input image, so that the parallax image creation unit 6 can output a parallax image 15 covering the entire input image. A half region of an input image refers to a region which is half, in area, of the input image, and this region may have an arbitrary shape.

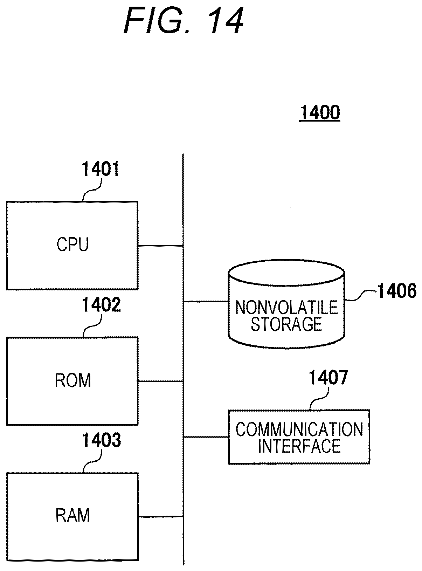

The first-region parallax image creation unit 61 and the second-region parallax image creation unit 62 may be constituted by exactly the same circuit structure, except that the data regions of the input sources (the ranges of memory addresses in the data holding region 5) and the data regions of the output destinations (the ranges of memory addresses in the data holding region 7) for them are different from each other. Briefly, the first-region parallax image creation unit 61 and the second-region parallax image creation unit 62 are different from each other, as to which of the first region and the second region of each captured image to process. The data regions of the input sources and the data regions of the output destinations can be easily changed over using a register or the like. For example, information about the memory addresses recorded in the register (not illustrated) may be changed over, by rewriting, through software executed by the control core 84 for controlling the entire operation of the image processing device 3. The memory is, for example, a RAM1403 in FIG. 14, which will be described later.

The ranges selected as the first region and the second region are changed over according to the parallax-image processing cycle, as described later. Specifically, in a case of using a parallax-image processing cycle coincident with an imaging cycle 41 (output transmission cycle) of the camera modules 1 and 2 as a base, a parallax image 15 is created from the entire region composed of the first region and the second region. In a case of using a parallax-image processing cycle that is twice the base cycle, the ranges selected as the first region and the second region are the same. Since the ranges selected as the first region and the second region are the same and overlap each other, a parallax image with a half size is obtained in this case.

The recognized-object processing unit 8 performs a recognition process for recognizing a surrounding environment around the vehicle, based on the parallax image 15 created by the parallax image creation unit 6. The parallax image is image information provided with distance information acquired by stereo vision. The recognized-object processing unit 8 detects an object that can exist in front of the vehicle, based on the image information including the distance information. Further, if the recognized-object processing unit 8 detects an object, the recognized-object processing unit 8 performs a process for holding information about a region where the object exists, as object detection information (pieces of object detection information 16), in the data holding region 7. The recognized-object processing unit 8 determines (identifies) the type of the object, such as a vehicle, a pedestrian, or an obstacle by a recognized-object identification process, based on the pieces of object detection information 16, and holds the result of the determination as identification information (pieces of identification information 17), in the data holding region 7. In the recognized-object identification process, it is possible to use a machine learning method such as a neural network or deep learning.

Finally, the recognized-object processing unit 8 (the control core 84) transmits the pieces of identification information 17 to a control device (not illustrated) in the vehicle, through a vehicle communication unit 20. The control device in the vehicle controls an operation of the vehicle which is important for safety, such as actuation of a collision damage reduction brake, according to the content of the pieces of identification information 17. For example, the control device in the vehicle is constituted by an electronic control unit (ECU). The vehicle communication unit 20 is constituted by an in-vehicle network such as a controller area network (CAN).

The information in the pieces of object detection information 16 and the pieces of identification information 17 is limited to information about the size region of the recognized object and the position thereof and has a significantly smaller data size than the image sizes of the original captured images 11 and 12. Therefore, the amount of calculations in the processes for handling these data is relatively small. Accordingly, the recognized-object processing unit 8 can be constituted by a programmable processing block such as a microcomputer or a signal processing processor, rather than by dedicated hardware.

In the present embodiment, the recognized-object processing unit 8 is constituted by a processor including cores 81 to 84 for performing four calculation processes. A recognized-object detection processing core 81 is allocated as a core having charge of performing the recognized-object detection process, a recognized-object identification processing first core 82 and a recognized-object identification processing second core 83 are allocated as cores having charge of performing the recognized-object identification process, and the control core 84 is allocated as a core having charge of performing processes for controlling the entire image processing device 3, in order to implement the respective processes. By providing the plurality of recognized-object identification processing cores, it is possible to increase the throughput from the start of imaging to the identification of a recognized object.

As described above, the image processing device (the image processing device 3) according to the present embodiment includes the parallax image creation unit (the parallax image creation unit 6) that creates a parallax image from a pair of captured images, and the control unit (the control core 84) that selects regions of captured images to be used for creating the parallax image by the parallax image creation unit. According to the present embodiment, using the aforementioned structure, it is possible to flexibly realize changeover of object-detection regions of captured images, according to the number of captured images to be introduced into image processing per unit time, without increasing the amount of calculations.

Furthermore, the image processing device according to the present embodiment includes a plurality of equivalent parallax image creation units (the first-region parallax image creation unit 61 and the second-region parallax image creation unit 62) for creating a parallax image from a pair of captured images. According to the present embodiment, it is possible to create a parallax image from each region of captured images, according to the setting of changeover of regions of captured images, with the plurality of parallax image creation units.

### [Operations in an Expressway Traveling Scene]

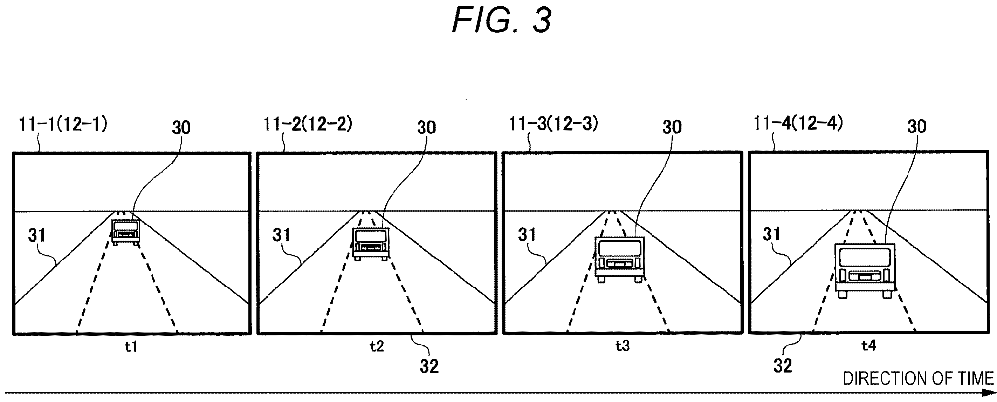

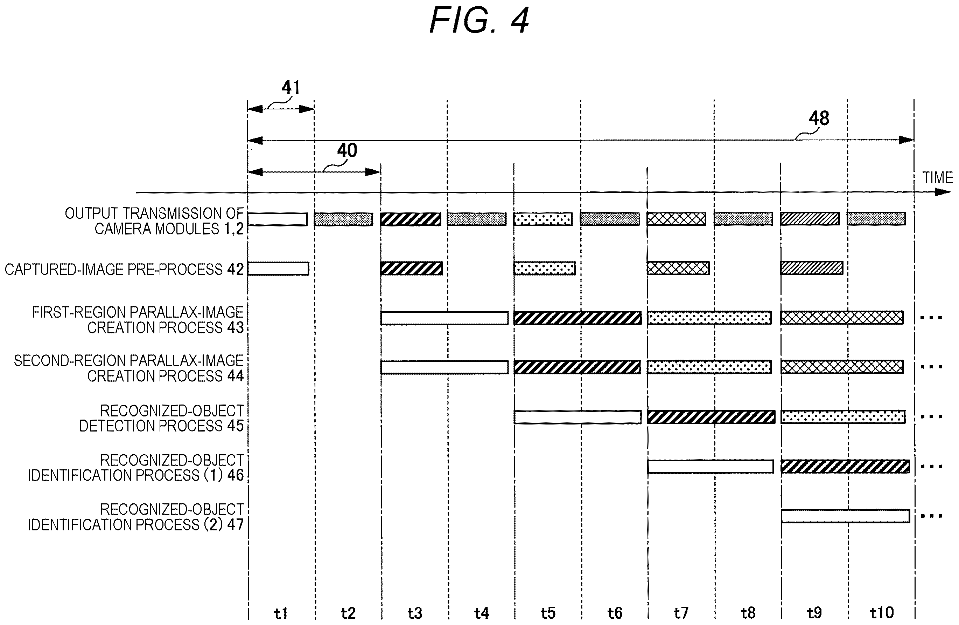

Here, there will be described operations of the imaging device 10 in a scene of traveling on an expressway (when there is no object running thereinto), with the structure of the present embodiment, with reference to FIGS. 3 and 4. The expressway traveling scene is an example of a high-speed traveling scene. FIG. 3 illustrates an example of captured images in captured images 11 and 12 in an expressway traveling scene.

FIG. 3 is a view illustrating an example of captured images inputted to the image processing device 3 during traveling on an expressway.

In the scene of traveling on an expressway 31, it is required to detect a distant recognized object, such as a distant forward vehicle 30 in FIG. 3, for example. For this reason, in the right captured images 11-1 to 11-4 and the left captured images 12-1 to 12-4 captured by the camera modules 1 and 2, all the angles of view (the entire regions of the captured images) out of the imaging angles of view including the distant forward vehicle 30 are used. However, the number of captured images inputted to the captured-image pre-processing unit 4, out of the captured images 11 and 12, is such that images are inputted thereto in every other imaging cycle (imaging cycle 41 in FIG. 4), so as to simplify the calculation processes after the captured-image pre-processing unit 4. FIG. 4 illustrates an example of operation timings of the respective processes in the expressway traveling scene.

FIG. 4 is a timing chart illustrating an example of image processing operations in the image processing device 3, during traveling on the expressway 31.

The captured-image pre-process 42 in the captured-image pre-processing unit 4 is operated only during even-numbered cycles or odd-numbered cycles, with respect to imaging cycles 41 (output transmission cycles) of the camera modules 1 and 2. Namely, captured images 11 and 12 captured during the unused cycles are discarded. In the example of FIG. 4, this state is illustrated. That is, every other right captured image and every other left captured image, which are the right captured image 11-2 and the left captured image 12-2, and the right captured image 11-4 and the left captured image 12-4 (the even-numbered frames 32 in the intervals t2 and t4 (FIG. 3), for example), are discarded. The discarding process can be realized simply by ignoring the inputs of the captured images in the captured-image pre-processing unit 4.

The first-region parallax image creation unit 61 and the second-region parallax image creation unit 62 subsequent to the captured-image pre-processing unit 4 operate in a cycle (parallax-image creation processing cycle 40) with a length twice that of the imaging cycle 41 (the output transmission cycle) of the camera modules 1 and 2. Therefore, it is desirable that each of the subsequent image processing operations be completed within the time period of the parallax-image creation processing cycle 40, by using the parallax-image creation processing cycle 40 as a reference.

In the present embodiment, a first-region parallax-image creation process 43 and a second-region parallax-image creation process 44 in the first-region parallax image creation unit 61 and the second-region parallax image creation unit 62, respectively, are performed in parallel in terms of timing. At this time, the first-region parallax image creation unit 61 and the second-region parallax image creation unit 62 have such a hardware structure as to complete the processes within the parallax-image creation processing cycle 40 (the interval from t3 to t4, for example). The hardware used for the parallax-image creation processes may be hardware that takes a time period twice as long as the imaging cycle 41, which can reduce the hardware resources as compared with a case of a structure adapted to complete the parallax-image creation processes within the imaging cycle 41.

Incidentally, a structure not according to the present embodiment uses one parallax image creation unit adapted to complete the process within the imaging cycle 41. In contrast to such a structure, in the present embodiment, the two parallax image creation units (the first-region parallax image creation unit 61 and the second-region parallax image creation unit 62) are used for parallel calculations. Thus, by making the parallax-image creation processing cycle twice longer, it is possible to suppress the increase of the hardware resources (circuit scales).

The recognized-object detection process 45 for obtaining pieces of object detection information 16 from the parallax image 15 is performed using the recognized-object detection processing core 81 (FIG. 1) in the recognized-object processing unit 8. In general, there is known a method for detecting an object by converting parallax information (corresponding to distance information) into a histogram in order to obtain pieces of object detection information 16 from a parallax image, when the distance to the own vehicle has been obtained for each pixel in the parallax image. The calculation processing load for detecting an object from a parallax image by this method is low. Therefore, the recognized-object detection process 45 by the recognized-object detection processing core 81 is completed within the parallax-image creation processing cycle 40 (an interval from t5 to t6, for example).

The calculation processing load for the recognized-object identification process for obtaining pieces of identification information 17 from pieces of object detection information 16 is generally larger than that of the recognized-object detection process 45 for detecting an object from a parallax image, although it depends on the target value of the object recognition rate. Therefore, if the recognized-object identification process is performed only by recognized-object identification processing first core 82, there is a high possibility that all the process is not completed within the parallax-image creation processing cycle 40, and the process is terminated halfway and is required to be restarted in the next cycle. In this case, the result of calculation halfway through the recognized-object identification process should be temporarily saved in the data holding region 7, and the calculation should be restarted in the next processing cycle. However, in the next processing cycle, the calculation is continued and, therefore, the result of output from the preceding stage (the recognized-object detection process 45) is discarded, without being used.

For coping therewith, in the present embodiment, the recognized-object identification process is allocated to two cores, namely, the recognized-object identification processing first core 82 and the recognized-object identification processing second core 83. Further, a recognized-object identification process in the former stage by the recognized-object identification processing first core 82 is defined as a recognized-object identification process (1) 46, and a recognized-object identification process in the latter stage by the recognized-object identification processing second core 83 is defined as a recognized-object identification process (2) 47, such that the respective processes are completed within the parallax-image creation processing cycle 40 (an interval from t7 to t8, and an interval from t9 to t10, for example). With this structure, the throughput 48 from the timing of start of imaging by the camera modules 1 and 2 to the acquisition of the result of the identification processes on target captured images is 10 times the imaging cycle 41 (the time period from the interval t1 to the interval t10).

### [Operations in a General-Road Traveling Scene]

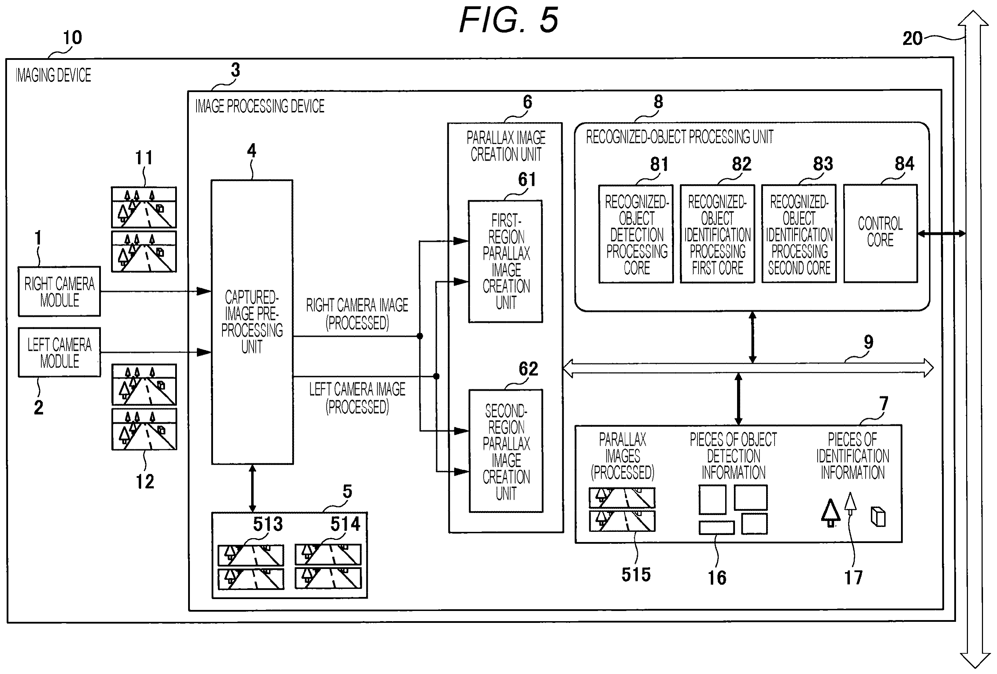

There will be described operations of the imaging device 10 in a scene of traveling on a general road (in a case where there is an object running thereinto), with the structure according to the present embodiment, with reference to FIGS. 5 to 8. The general-road traveling scene is an example of a low-speed traveling scene.

FIG. 5 is a diagram illustrating an example of a functional structure of the imaging device 10 including the image processing device 3, and an example of data held during low-speed traveling. The functional structure of the image processing device 3 illustrated in FIG. 5 is the same as the functional structure of the image processing device 3 illustrated in FIG. 1, except for selection of regions.

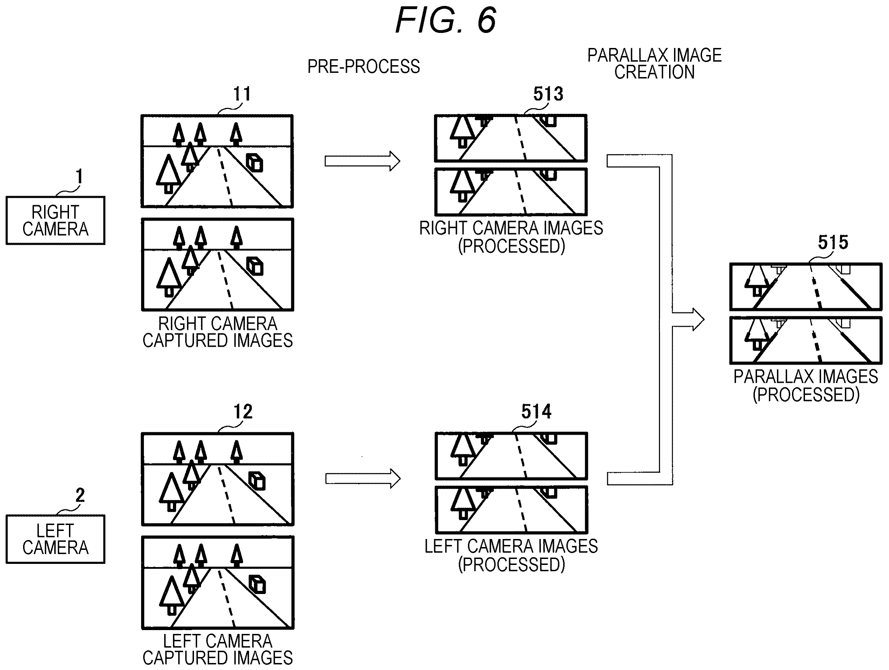

FIG. 6 is an enlarged view of an example of held data (images) in the image processing device 3, during low-speed traveling. In the examples of FIGS. 5 and 6, regions of captured images to be used for creating a parallax image are divided into an upper side and a lower side.

The structure of the image processing device 3 illustrated in FIG. 5 is the same as the structure of the image processing device 3 illustrated in FIG. 1, but is different therefrom in magnitudes (sizes) of data of processed captured images and parallax images which are handled therein. Each of the first-region parallax image creation unit 61 and the second-region parallax image creation unit 62 uses, as input data, 1/2 regions of the respective captured images (right captured images 513 and left captured images 514) out of the captured images 11 from the right camera module 1 and the captured images 12 from the left camera module 2. Each of the first-region parallax image creation unit 61 and the second-region parallax image creation unit 62 creates parallax images of 1/2 regions (parallax images 515), using the respective captured images out of the right captured images 513 and the left captured images 514 having been processed.

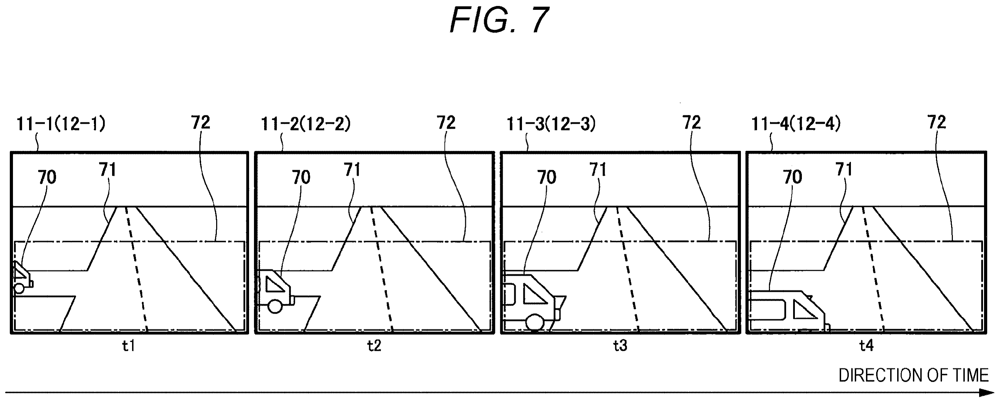

Here, there will be described an example of captured images in captured images 11 and 12 in a general-road traveling scene, with reference to FIG. 7.

FIG. 7 is a view illustrating an example of captured images inputted to the image processing device 3, during traveling on a general road.

In the general-road traveling scene, in order to cope with an object running into a general road 71 from the side thereof, it is required to detect and identify, for example, a forward vehicle 70 having a lateral speed with respect to the own vehicle, in a side area, as early as possible. Therefore, out of the right captured images 11 and the left captured images 12 (right captured images 11-1 to 11-4 and left captured images 12-1 to 12-4, in the example of FIG. 7) captured by the camera modules 1 and 2, all the captured images are inputted to the captured-image pre-processing unit 4.

However, only half regions of the respective captured images are used, and the range of these regions is adjusted so as to capture regions showing the forward vehicle 70. The range (position and size) of a region showing an object such as a vehicle or a person having a risk of colliding with the own vehicle generally changes depending on the speed of the own vehicle. Therefore, it is preferable to adjust the range of this region for each speed. In the example of FIG. 7, as the region set there as a lower-half region (a lower-half portion of the entire angle of view) of each captured image (with the entire angle of view), and a lower-side region 72 is inputted to the captured-image pre-processing unit 4.

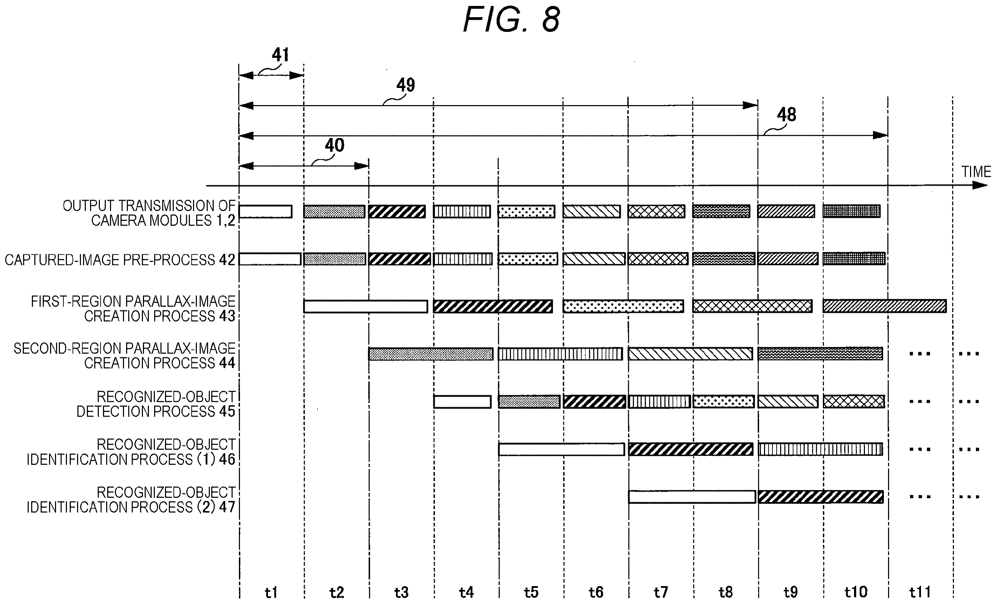

As illustrated in FIG. 6, the sizes of the respective captured images in the right captured images 513 and the left captured images 514 having been processed, which are held in the data holding region 5 by the captured-image pre-processing unit 4, and the sizes of the respective parallax images in the parallax images 515, which are held in the data holding region 7, are half of those in the expressway traveling scene. However, since the captured-image pre-processing unit 4 does not perform selection and discarding of the captured images to be processed, as described above, the number of captured images to be processed is twice the number of captured images illustrated in FIG. 3, and there is no difference in the capacity of the necessary data holding region. FIG. 8 illustrates an example of operation timings of the respective processes in a general road traveling scene.

FIG. 8 is a timing chart illustrating an example of image processing operations in the image processing device 3, during traveling on the general road 71.

A setting is changed over so as to cause the captured-image pre-process 42 in the captured-image pre-processing unit 4 to operate in all the imaging cycles 41 (intervals t1, t2, ···, for example), with respect to the imaging cycles 41 (output transmission cycle) of the camera modules 1 and 2. Control for changing over the setting is performed by the control core 84 executing software for changing over the setting, based on information provided from the vehicle, during traveling. The first-region parallax image creation unit 61 and the second-region parallax image creation unit 62 subsequent to the captured-image pre-processing unit 4 operate in a cycle twice as long as the imaging cycle 41 (the output transmission cycle) of the camera modules 1 and 2. Therefore, if first-region parallax image creation unit 61 and the second-region parallax image creation unit 62 process the entire regions of the respective captured images in the captured images 11 and 12, the process can not be completed in time, and any of the captured images is discarded.

Therefore, in a general-road traveling scene, only a half region of each captured image is used. Specifically, only the lower-side regions 72 in the captured images, which are important for detecting an object running into the general road from the side in the general-road traveling scene in FIG. 7, are processed, and captured images 11 and 12 are alternately inputted to the first-region parallax image creation unit 61 and the second-region parallax image creation unit 62 in the imaging cycles 41. In the present embodiment, such changeover can be easily performed, since the data regions (memory address ranges) of the input sources for the first-region parallax image creation unit 61 and the second-region parallax image creation unit 62 can be changed over, by rewriting, through the register, as described above.

With this structure, it is possible to obtain parallax images 515 using the lower-side regions 72, by the first-region parallax-image creation process 43 (intervals t2 to t3, for example) in the first-region parallax image creation unit 61 and the second-region parallax-image creation process 44 (intervals t3 to t4, for example) in the second-region parallax image creation unit 62.

The recognized-object detection processing core 81 in the recognized-object processing unit 8 performs the recognized-object detection process 45, thereby obtaining pieces of object detection information 16. In the general-road traveling scene, the parallax images are halved in size, which makes the calculation processing load half. This enables acquiring an output from the recognized-object detection process 45 in each imaging cycle 41 (intervals t4, t5, ···, for example).

The recognized-object identification process necessitates a calculation processing load similar to that during traveling on an expressway, but it is not absolutely necessary to perform the recognized-object identification process in each processing cycle. For example, in the example of FIG. 8, no recognized-object identification process is performed based on the result of the recognized-object detection process 45 in the interval t5, and this result of the recognized-object detection process 45 is discarded. This is for the following reason. That is, if a target object has been detected by the recognized-object detection process 45, it is easy to estimate the same recognized object to be the same as the recognized object having been once identified, based on the position information.

In the example of FIG. 8, in the first processing cycle, the recognized-object identification processing first core 82 performs the recognized-object identification process (1) 46 in the intervals t5 to t6, and, subsequently, the recognized-object identification processing second core 83 performs the recognized-object identification process (2) 47 in the intervals t7 to t8. Then, regarding the forward vehicle 80 in a side area, which has been first identified by the recognized-object identification process (1) 46 and the recognized-object identification process (2) 47, an object existing at substantially the same position in the pieces of object detection information 16 can be estimated to be this forward vehicle 80 in the side area, in the recognized-object identification process (1) 46 (intervals t7 to t8, for example), and the recognized-object identification process (2) 47 (intervals t9 to t10, for example) in the next processing cycle.

Furthermore, when there is a detected object other than the forward vehicle 80 in the side area, in the pieces of object detection information 16, the recognized-object identification processes for the next object (the object other than the forward vehicle 80) are sequentially started, at the time point of the completion of the recognized-object identification process (1) 46 for the forward vehicle 80 by the recognized-object identification processing first core 82 and the recognized-object identification process (2) 47 for the forward vehicle 80 by the recognized-object identification processing second core 83. With the structure according to the present embodiment, in the general-road traveling scene, the throughput 49 until the acquisition of the result of the recognized-object identification processes at last is 8 times the imaging cycle 41 (the time period from the interval t1 to the interval t8), which is shorter than the throughput 48 in the expressway traveling scene.

Incidentally, although it has been described that, when the calculation is restarted in the next processing cycle (for example, the cycle in which imaging is started at the timing of the interval t2), the result of outputting from the stage preceding the recognized-object identification processes (for example, the result of the recognized-object detection process 45 in the interval t5) is discarded, the result of outputting from the preceding stage may be held in the data holding region 7 without being discarded. Only the detection of the presence or absence of a forward object is useful for vehicle control such as collision avoidance, which contributes to safety of traveling.

With the aforementioned image processing device (the image processing device 3) according to the present embodiment, in processing the overlapping regions of captured images obtained by the plurality of cameras (the camera modules 1 and 2), it is possible to change over the object-detection regions of the captured images, as the stereo camera, according to the number of captured images to be introduced into image processing per unit time, without increasing the amount of calculations. Therefore, according to the present embodiment, it is possible to achieve both suppression of the increase of electronic circuit scales and securing of traveling safety. For example, by suppressing the increase of electronic circuit scales, it is possible to improve the mountability on a vehicle.

Furthermore, according to the present embodiment, selection of regions in captured images and setting of the number of pairs of captured images to be introduced into image processing per unit time are performed, without changing the imaging cycle of the pair of camera modules. Consequently, the present embodiment contributes to suppression of the increase of electronic circuit scales and securing of traveling safety, without increasing the amount of calculation.

### <Second Embodiment>

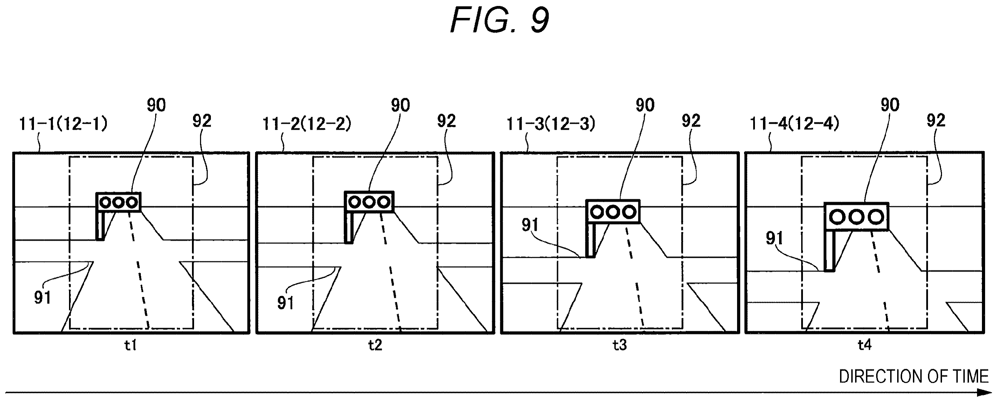

In the first embodiment, there have been described the respective operation modes of the image processing device 3, separately, regarding the operation modes in an expressway traveling scene and in a general-road traveling scene. However, in a general-road traveling scene, there are other demands than the aforementioned demand, such as a demand for changing over regions in captured images (parallax images) to regions corresponding to angles of view for obtaining traffic-signal information about a traffic signal, when the vehicle stops, for example. Therefore, in the second embodiment of the present invention, there will be described operations of an image processing device 3 for changing over regions in captured images more flexibly, with reference to FIG. 9.

FIG. 9 is a view illustrating an example of captured images inputted to the image processing device 3 according to the second embodiment. On receiving information indicating that the own vehicle has stopped from a control core 84, a captured-image pre-processing unit 4 in the image processing device 3 changes over the regions in captured images to regions corresponding to angles of view for obtaining signal information, when the vehicle has stopped. In this case, a region 92 is defined in each of captured images (right captured images 11-1 to 11-4 and left captured images 12-1 to 12-4 in the example of FIG. 9) out of captured images 11 and 12. The region 92 is a region having such a size and at such a position that a traffic signal 90 installed at an intersection 91 falls therewithin. The region 92 is longer in the longitudinal direction and shorter in the lateral direction than the lower-side region 72 illustrated in FIG. 7.

Such changeover of the region setting can be realized only by a process for changing over information indicating the data regions of the input sources and the data regions of the output destinations for the first-region parallax image creation unit 61 and the second-region parallax image creation unit 62 in FIG. 5, as described above.

Incidentally, although there has been described an example where the regions of captured images are changed over to regions corresponding to angles of view for obtaining the signal information when the vehicle has stopped, changeover of the region setting according to the present embodiment may be performed when the vehicle speed has decreased to a speed immediately before the stop (a preliminarily-set extremely low speed).

### <Third Embodiment>

In a case of placing importance on the throughput even in an expressway traveling scene, it is possible to detect distant and nearby vehicles, using the data processes described with reference to FIGS. 5 to 8. In this case, the regions of captured images for actually detecting an object are half of the original captured images. In order to compensate for this, according to the second embodiment of the present invention, a region considered not to show an object to be detected is defined as a region not to be subjected to the processes subsequent to the captured-image pre-processing unit 4, thereby securing the size of the region.

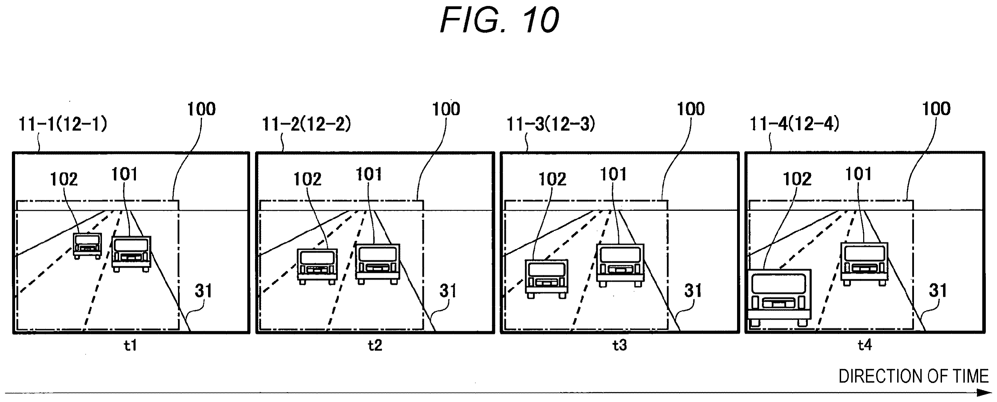

FIG. 10 is a view illustrating an example of captured images inputted to an image processing device 3 according to the third embodiment. Here, there will be described an example where two vehicles 101,102 are traveling on an expressway 31, forward of the own vehicle.

In FIG. 10, when the own vehicle is traveling in the rightmost lane in a three-lane road, a region for obtaining a parallax image, such as region 100, is selected in each of the captured images (right captured images 11-1 to 11-4 and left captured images 12-1 to 12-4, in the example of FIG. 10,) out of captured images 11 and 12. In this example, while a distant area is monitored, the region on the right of the region 100, which is considered not to show an object to be detected, is not subjected to the processes after the captured-image pre-processing unit 4.

Such changeover of the region setting can be immediately performed only by changing over, through rewriting, information indicating the data regions of the input sources and the data regions of the output destinations for the first-region parallax image creation unit 61 and the second-region parallax image creation unit 62 in the image processing device 3 (FIGS. 1 and 5) according to the first embodiment, as described above. Also, the first to third embodiments can be implemented by combining two or more of the embodiments.

### <Fourth Embodiment>

### [The Structure of an Imaging Device Including an Image Processing Device]

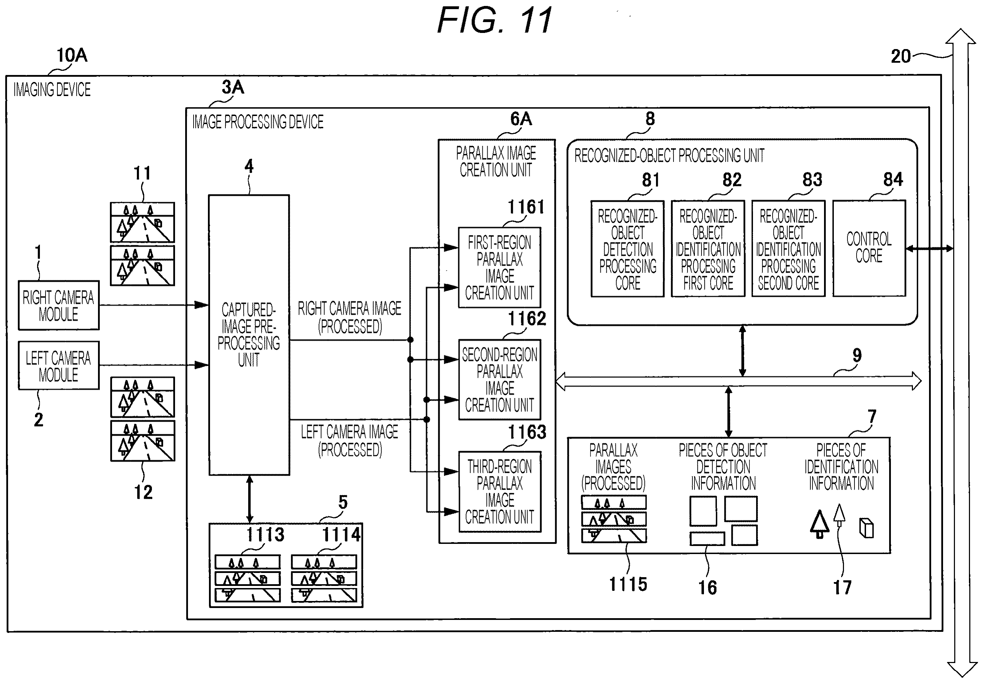

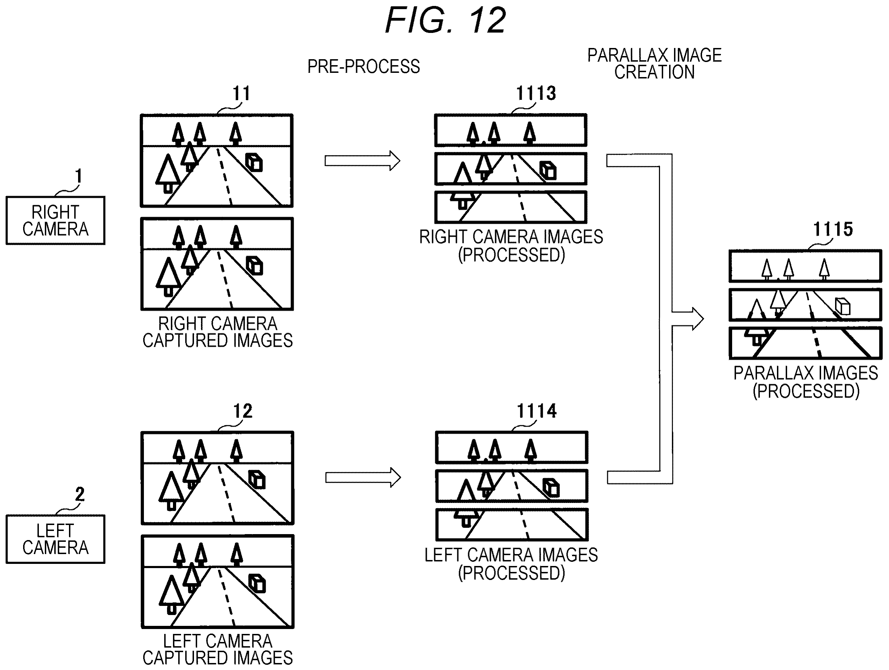

Next, there will be described the structure of an imaging device including an image processing device according to a fourth embodiment of the present invention, with reference to FIGS. 11 and 12.

FIG. 11 is a diagram illustrating an example of a functional structure of the imaging device including the image processing device according to the fourth embodiment.

FIG. 12 is an enlarged view of an example of data (images) held when the vehicle is traveling, in the image processing device according to the fourth embodiment.

The imaging device 10A according to the present embodiment is different from the imaging device 10 (FIG. 1) according to the first embodiment in that the parallax image creation unit 6 in the image processing device 3 is replaced with a parallax image creation unit 6A in the image processing device 3A. The parallax image creation unit 6A includes a first-region parallax image creation unit 1161, a second-region parallax image creation unit 1162, and a third-region parallax image creation unit 1163.

Each of the first-region parallax image creation unit 1161, the second-region parallax image creation unit 1162, and the third-region parallax image creation unit 1163 uses, as input data, a 1/3 region of each captured image out of captured images 11 acquired from a right camera module 1 and captured images 12 acquired from a left camera module 2.

The 1/3 region of each captured image which is inputted to each parallax image creation unit 1161~1163 is a 1/3 region of each captured image having been processed by a captured-image pre-processing unit 4. Namely, the right captured images ("right camera images" in the figure) 1113 from the right camera module 1, which have been processed, and the left captured images ("left camera images" in the figure) 1114 from the left camera module 2, which have been processed, are temporarily stored in the data holding region 5 of the captured-image pre-processing unit 4 and are inputted to the parallax image creation unit 6 in an appropriate processing cycle.

Each of the parallax image creation units 1161-1163 is adapted to create parallax images 1115 for respective 1/3 regions out of the right captured images 1113 having been processed, and the left captured images 1114 having been processed. With this structure, it is possible to select regions of captured images in flexible ways, and, further, it is possible to use different processing cycles, namely, different throughputs, starting from the captured-image pre-processing unit 4, depending on the traveling scene.

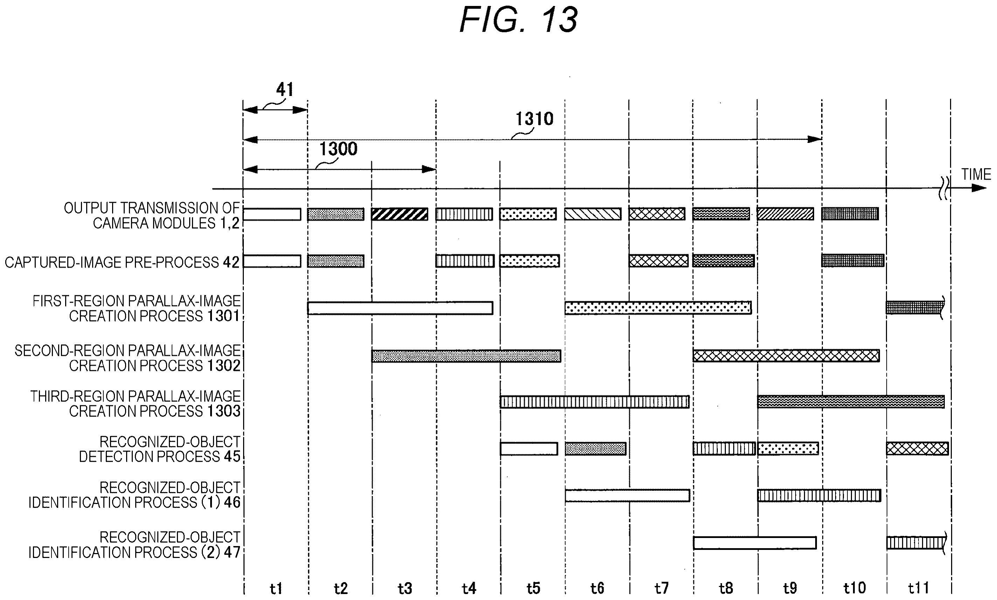

For example, in an expressway traveling scene in which the traveling speed falls in a highest-speed region, the captured-image pre-processing unit 4 discards two captured images out of captured images in three cycles, with respect to the imaging cycle 41 (FIG. 13). For example, the parallax-image creation processing cycle 1300 from the captured-image pre-processing unit 4 is set to be three times the imaging cycle 41.

When the speed region of the traveling speed has decreased in an expressway traffic-jam scene or the like, the captured-image pre-processing unit 4 introduces two captured images out of captured images in three cycles, in order to early detect an interrupting vehicle. FIG. 13, which will be described later, illustrates an example of operation timings of the respective processes in this case.

Incidentally, in the example of FIG. 12 described above, each captured image is divided into three regions in the longitudinal direction (upper, center, lower), but may be divided into three regions in the lateral direction (left, center, right). Furthermore, in a case where each captured image is divided into three regions, the respective regions may not be equal to each other. However, the larger the region, the longer the time period until the completion of object identification. Therefore, by dividing each captured image into equal regions, it is possible to shorten the time period (throughput) until the completion of object identification for a pair of captured images. In the present embodiment, the three parallax image creation units 1161~1163 are provided so as to divide each captured image into three regions, but four or more parallax image creation units may be provided so as to divide each captured image into four or more regions.

### [Operations in an Expressway Traffic-Jam Scene]

FIG. 13 is a timing chart illustrating an example of image processing operations in the image processing device 3A, during traveling through a traffic jam on an expressway. Here, there is illustrated an example of image processing operations in a case where the captured-image pre-processing unit 4 introduces two captured images out of captured images in three cycles.

After the captured-image pre-processing unit 4, the parallax-image creation processes are performed on only the lower 2/3 regions of captured images, out of captured images 11 and 12, thereby obtaining parallax images having 2/3 the size of each original captured image. In the example of FIG. 13, the first-region parallax image creation unit 1161 performs a first-region parallax-image creation process 1301 (for example, intervals t2 to t4) on the lower region of a captured image having been processed (for example, an interval t1), and the second-region parallax image creation unit 1162 performs a second-region parallax-image creation process 1302 (for example, intervals t3 to t5) on the central region of a captured image having been processed (for example, an interval t2). The image in the remaining upper 1/3 region (for example, the image having been pre-processed in an interval t3) is discarded.

Next, a recognized-object detection process 45 (for example, the interval t5) based on the result of the first-region parallax image creation process 1301 is performed, and subsequently, the recognized-object detection process 45 (for example, an interval t6) based on the result of the second-region parallax image creation process 1302 is performed. Then, a recognized-object identification process (1) 46 (for example, intervals t6 to t7) and a recognized-object identification process (2) 47 (for example, intervals t8 to t9) based on the result of the recognized-object detection process 45 (the interval t5) are performed. With this structure, the throughput 1310 from the timing of the start of imaging by the camera modules 1 and 2 to the acquisition of the result of the identification processes on the target captured images is 9 times the imaging cycle 41 (the time period from the interval t1 to the interval t9). In the example of FIG. 13, the result of the recognized-object detection process 45 in the interval t6 is discarded.

In a traffic-jam scene, the speed is lower than during high-speed traveling, and it is not necessary to detect a distant object. Therefore, by setting the 1/3 regions of captured images to be discarded as regions which show a distant object, it is possible to prevent occurrences of safety problems. Accordingly, the time period of the parallax-image creation processing cycle for obtaining parallax images is 2/3 that in a case where the entire regions of captured images are processed, which makes it possible to earlier detect a vehicle approaching an area forward of the own vehicle.

In the example of FIG. 13 described above, the third-region parallax image creation unit 1163 performs a third-region parallax-image creation process 1303 on the lower region of the captured image pre-processed in the interval t4 in the next parallax-image creation processing cycle 1300. Further, the first-region parallax image creation unit 1161 performs the first-region parallax-image creation process 1301 on the central region of the captured image pre-processed in the interval t5.

Furthermore, in a case where the traffic jam has got more severe and the speed range of the vehicle has lowered or the vehicle has come to travel on a general road, captured images 11 and 12 are introduced in all the cycles of the captured-image pre-processing unit 4, with respect to the imaging cycle 41. The captured-image pre-processing unit 4 defines 1/3 regions of the original captured images as the regions of the captured images to be used. This makes it possible to earlier detect an object. Other operations are similar to those in the first embodiment.

The control core 84 distinguishes an expressway traveling scene, an expressway traffic-jam scene, and a general-road traveling scene, based on information reflecting the traveling scene of the vehicle, which is obtained from the vehicle. Further, the control core 84 notifies the captured-image pre-processing unit 4 of the result of the distinction. The captured-image pre-processing unit 4 changes over the region setting, based on the result of the distinction of the traveling scene. As described above, according to the present embodiment, the selection of regions of captured images, and the setting of the number of pairs of captured images to be introduced into the image processing per unit time are changed over, according information reflecting the traveling scene of the vehicle.

The information reflecting the traveling scene of the vehicle may be speed information obtained from the vehicle, map information used for driving the vehicle, or road traffic information (traffic-jam information). For example, the control core 84 calculates speed information based on information about an engine rotating speed of the vehicle, a wheel rotating speed or the like, or acquires speed information from another control device in the vehicle. Also, the control core 84 acquires map information recorded in a nonvolatile storage in the vehicle or map information stored in an external server, based on the current position. Further, the control core 84 receives road traffic information received from a road traffic information communication system (Vehicle Information and Communication System), for example.

Also, the region setting may be changed over, based on not only information from the vehicle but also information obtained from captured images acquired by the imaging device 10A. For example, in a case where there is no oncoming vehicle in vehicle information obtained from right captured images 13 and left captured images 14 having been processed, and only vehicles traveling in the same direction are detected, it is determined that the own vehicle is in an "expressway traveling scene". In a case where an increasing number of vehicles have been traveling in the same direction, it is determined that the own vehicle is in an "expressway traffic-jam scene" or the like.

In general, in order to obtain the effects according to the present invention, the size of the regions of captured images (parallax-image region size) used for creating parallax images is proportional to the parallax-image creation processing cycle. For example, if the parallax-image region size is set to 1/3 of an entire captured image, the parallax-image creation processing cycle can be set to 1/3 times that of a case of processing the entire captured images. Furthermore, if the parallax-image region size is set to 2/3 of an entire captured image, the parallax-image creation processing cycle can be set to 2/3 times that of a case of processing the entire captured images. The parallax-image creation processing cycle of a case where the entire region of each captured image is selected as the parallax-image region size is the base (1 time) of the parallax-image creation processing cycle, which corresponds to the imaging cycle 41 (output transmission cycle) of the camera modules 1 and 2.

Namely, the relationship between the selected regions of captured images, and the number of pairs of captured images to be introduced into the image processing per unit time is desirably such that the value of the product of the rate in size of the selected region to the entire region of each original captured image, and the number of pairs of captured images to be introduced into the image processing per unit time is equal to or less than a certain value, which is uniquely determined depending on the hardware. with this structure, it is possible to realize changeover of the object-detection regions of captured images, as a stereo camera, without increasing the amount of calculation.

If the parallax-image creation processing block is divided in the parallax image creation unit 6 as described above, then, corresponding thereto, it is possible to increase the speed of detection of an object in regions of higher importance in captured images. However, corresponding thereto, the throughput is deteriorated, in a case where the entire regions of captured images are used for creating parallax images. If the parallax image creation unit 6 is structured in such a way as to realize the same throughput even in a case where the entire regions of captured images are used for creating parallax images, this necessitates parallax-image creation processing blocks for calculating parallaxes in parallel in the same number as the divisions, in the parallax-image creation unit 6, which enlarges the hardware of the entire parallax image creation unit 6, thereby making it impossible to obtain the effect of the present invention.

Therefore, according to the aforementioned present embodiment, it is possible to achieve both suppression of the increase of electronic circuit scales and securing of traveling safety similarly to the first to third embodiments. Further, according to the present embodiment, unused parallax-image creation blocks (the first-region parallax image creation unit 1161, the second-region parallax image creation unit 1162, or the third-region parallax image creation unit 1163), and unused recognized-object identification processing cores (the recognized-object identification processing first core 82 or the recognized-object identification processing second core 83) are stopped, which makes it possible to realize an image processing device capable of reducing power consumption.

### [The Hardware Structure of the Image Processing Device]

Next, there will be described the hardware structure of a computer included in the image processing device 3, 3A in the imaging device 10, 10A, with reference to FIG. 14.

FIG. 14 is a block diagram illustrating an example of the hardware structure of the computer included in the image processing device 3, 3A. A computer 1400 illustrated in FIG. 14 is hardware used as a so-called computer.

The computer 1400 includes a central processing unit (CPU) 1401, a read only memory (ROM) 1402, a random access memory (RAM) 1403, a nonvolatile storage 1406, and a communication interface 1407, which are each connected to a system bus.

The CPU1401 is an example of an arithmetic device (processor). The recognized-object processing unit 8 may include four processor cores for respective applications. The ROM1402 and the RAM1403 are examples of memories. For example, the data holding region 5 and the data holding region 7 are realized by the RAM1403.

The nonvolatile storage 1406 is a nonvolatile storage element having a larger capacity than that of a memory. Information about programs, tables, files, and the like for realizing the respective functions of the image processing device 3, 3A can be stored in a recording device such as a memory, a hard disk, or a solid state drive (SSD), or in a recording medium such as an IC card, an SD card, an optical disk, or a magneto-optical disk.

Programs for realizing the functions of the image processing devices 3 and 3A according to the aforementioned embodiments are stored in the respective nonvolatile storages 1406 therein. The nonvolatile storage 1406 is an example of a computer-readable non-transitory recording medium. Also the programs may be stored in the ROM1402. At least in a case where the functions of the processing blocks in the image processing device 3, 3A are implemented by software, the functions of the processing blocks in the image processing device 3, 3A are implemented by the CPU1401 executing the programs stored in the ROM1402 or the nonvolatile storage 1406.

The communication interface 1407 is constituted by a communication device or the like for controlling communication with other control devices (for example, the ECU) or an external server through an in-vehicle network.

Further, the present invention is not limited to the aforementioned respective embodiments, and can take other various application examples and modification examples, as long as not departing from the gist of the present invention described in the claims. For example, the aforementioned embodiments have been described in detail and concretely regarding the structures thereof for facilitating understanding of the present invention, and the present invention is not necessarily limited to structures including all the described constituents. Further, the structure according to an embodiment can be partially replaced with the structure according to another embodiment. Also, the structure according to an embodiment can be additionally provided with the structure according to another embodiment. Further, the structure according to each embodiment can be partially provided with other additional constituents, replaced with other constituents, or eliminated.

Further, some or all of the aforementioned structures, functions, processing units, and the like may be realized through hardware, for example, by being designed with an integrated circuit. For example, the captured-image pre-processing unit 4 and the parallax image creation unit 6 may be constituted by dedicated hardware such as a digital signal processor (DSP). Further, as the hardware, it is possible to use a processor device in a broad sense, such as a field programmable gate array (FPGA) or an application specific integrated circuit (ASIC).

Further, there are illustrated only control lines and information lines considered to be necessary for the description, and not all the control lines and the information lines in the product are illustrated. It may be considered that almost all the constituents are connected to each other in actual.

### Reference Signs List

1 right camera module
2 left camera module
3, 3A image processing device
4 captured-image pre-processing unit
5 data holding region
6 parallax image creation unit
6A parallax image creation unit
7 data holding region
8 recognized-object processing unit
10, 10A imaging device
11 right captured images
11-1 to 11-4 right captured image
12 left captured images
12-1 to 12-4 left captured image
13 right captured image (processed)
14 left captured image (processed)
15 parallax image
16 pieces of object detection information
17 pieces of identification information
40 parallax-image creation processing cycle
41 imaging cycle
61 first-region parallax image creation unit
62 second-region parallax image creation unit
81 recognized-object detection processing core
82 recognized-object identification processing first core
83 recognized-object identification processing second core
84 control core
92 region
100 region
513 right captured images
514 left captured images
515 parallax images
1113 right captured images
1114 left captured images
1115 parallax images
1161 first-region parallax image creation unit
1162 second-region parallax image creation unit
1163 third-region parallax image creation unit
1300 parallax-image creation processing cycle

## Claims

1. An image processing device for processing a series of a pair of captured images acquired by a pair of camera modules adapted to capture an image of a surrounding environment of a vehicle, thereby obtaining surrounding-environment recognition information for controlling the vehicle,
wherein the image processing device is enabled to select a region of the captured images to be used for creating a parallax image from the pair of captured images, and the image processing device changes over the selection of the region according to the number of the pairs of captured images to be introduced into image processing per unit time.

2. The image processing device according to claim 1, wherein a relationship between the selection of the region of the captured images, and the number of the pairs of captured images to be introduced into the image processing per unit time is such that a value of a product of a rate in size of the selected region to an entire region of an original captured image, and the number of the pairs of captured images to be introduced into the image processing per unit time is equal to or less than a certain value determined uniquely depending on hardware.

3. The image processing device according to claim 1, wherein
the selection of the region of the captured images, and setting of the number of the pairs of captured images to be introduced into the image processing per unit time are performed, without changing an imaging cycle of the pair of camera modules.

4. The image processing device according to claim 1, comprising
a parallax image creation unit adapted to create a parallax image from the pair of captured images, and
a control unit adapted to select a region of the captured images to be used in creating the parallax image by the parallax image creation unit.

5. The image processing device according to claim 1, comprising
a plurality of equivalent parallax image creation units adapted to create a parallax image from the pair of captured images.

6. The image processing device according to claim 1, wherein
the selection of the region of the captured images, and setting of the number of the pairs of captured images to be introduced into the image processing per unit time are changed over, according to information reflecting a traveling scene of the vehicle.

7. The image processing device according to claim 6, wherein
the selection of the region of the captured images, and the setting of the number of the pairs of captured images to be introduced into the image processing per unit time are changed over, according to speed information obtained from the vehicle.

8. The image processing device according to claim 6, wherein
the selection of the region of the captured images, and the setting of the number of the pairs of captured images to be introduced into the image processing per unit time are changed over, according to information obtained from the captured images.

9. An imaging device comprising a pair of camera modules adapted to capture an image of a surrounding environment of a vehicle, and an image processing device for processing a series of a pair of captured images acquired by the pair of camera modules to obtain surrounding-environment recognition information for controlling the vehicle,
wherein the image processing device is enabled to select a region of the captured images to be used for creating a parallax image from the pair of captured images, and the image processing device changes over the selection of the region according to the number of the pairs of captured images to be introduced into image processing per unit time.

10. An imaging processing method performed by an image processing device, the image processing device being adapted to process a series of a pair of captured images acquired by a pair of camera modules adapted to capture an image of a surrounding environment of a vehicle, thereby obtaining surrounding-environment recognition information for controlling the vehicle, the imaging processing method comprising:
a process for selecting a region of the captured images to be used for creating a parallax image from the pair of captured images, and changing over the selection of the region according to the number of the pairs of captured images to be introduced into image processing per unit time.
